# EUROPEAN PATENT SPECIFICATION

(11) **EP 3 420 309 B1**
(45) Date of publication and mention of the grant of the patent: **17.03.2021**
(21) Application number: 17714263.5
(22) Date of filing: 21.02.2017
(51) Int. Cl.: G01C 11/02, G02B 23/06, G02B 23/00, H04N 3/14, H04N 5/232, H04N 5/341

(54) **IMAGE SENSOR AND METHOD FOR A GEOSTATIONARY ORBITING SATELLITE**
BILDSENSOR UND VERFAHREN FÜR EINEN GEOSTATIONÄREN UMLAUFENDEN SATELLITEN
CAPTEUR D'IMAGE ET PROCÉDÉ DESTINÉS À UN SATELLITE EN ORBITE GÉOSTATIONNAIRE

(30) Priority: 22.02.2016 US 201662298347 P
(43) Date of publication of application: 02.01.2019
(73) Proprietor: Live Earth Imaging Enterprises, LLC, Salt Lake City, UT 84108 (US)
(72) Inventor: LECOMPTE, Malcolm, Salt Lake City, Utah 84117 (US); WILLIAMS, Franklin, Salt Lake City, Utah 84117 (US)
(74) Representative: Williams Powell
(86) International application number: PCT/GB2017/050440
(87) International publication number: WO 2017/144866

(56) References cited:
- US-A1- 2009 268 983
- US-A1- 2014 176 710
- US-B1- 6 185 037

## Description

### FIELD OF THE INVENTION

The Present invention relates to an image sensor and an imaging system for a geostationary orbiting satellite. Embodiments are particularly applicable in imaging hemispheres of the Earth, for example for use in weather forecasting.

### BACKGROUND TO THE INVENTION

Currently available satellite based imaging sensors provide images of an entire hemisphere of the Earth, but these images are delayed by minutes, or even tens of minutes. Current satellites produce images of an entire hemisphere at moderate to low resolution, specifically, of five hundred meters to four kilometers per pixel. In some cases, conventional satellites can provide images of small regions at high resolution but delivery to the user can be delayed by tens of minutes, or even days, due to processing to produce the images. Over the last forty-five years, since the first weather monitoring satellite was placed in geostationary orbit (GSO), various satellite systems have been used to monitor features on the Earth and in the Earth's atmosphere.

Current commercial satellites are unable to produce real-time images of a full hemisphere of the Earth due to the limitations imposed by their conventional design.

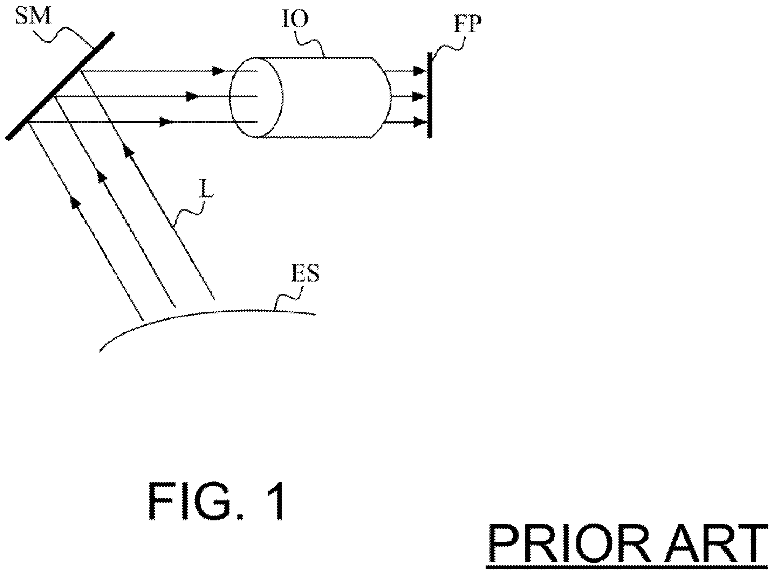

Figure 1 is a schematic view of a prior art system, which includes a scanning mirror SM on a satellite in orbit. The scanning mirror SM collects light L from the Earth's surface ES, and directs it to imaging optics IO. The output from the imaging optics IO illuminates a conventional focal plane FP, which produces an electronic signal that is used to form an image.

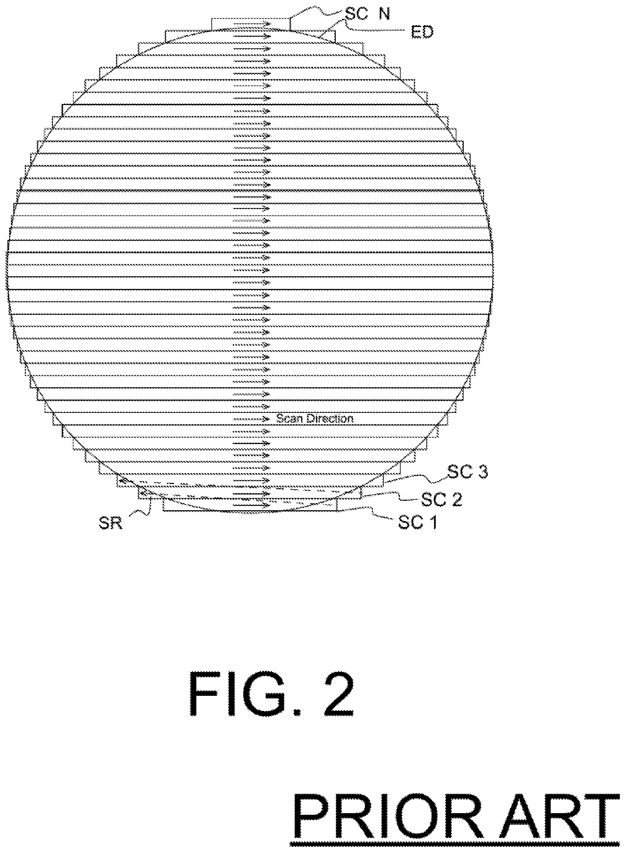

Figure 2 is another schematic view of a prior art system. Conventional satellites may scan the observable Earth disc ED as illustrated in Figure 2. Many scans SC1, SC2, SC3 through SCN, are generated in a sequential South to North fashion to produce an image of a full hemisphere. Non spinning satellites scans must include a scan retrace SR.

Conventional satellite imaging systems use scanning sensors, and produce images according to the method shown in Figure 2. Historically, that scanning process has taken as long as an hour with the most recent systems being able to do build up a full observable hemisphere image in a five minute period. There are physical limitations to this method so that creating images of the full observable hemisphere in a few seconds or less is not possible.

The fastest known satellite imaging system is the U.S. GOES-R weather satellite, and is planned for operation in 2017. The GOES-R uses a scanning sensor, and requires a minimum of five minutes to generate the scans that are then utilized to produce a full hemisphere image.

The GOES-R full hemisphere image is downlinked and transferred into a data processing center at NASA's Goddard Space Center, where it is processed for several minutes. The processed image is then sent back up to the GOES-R satellite, which relays the image to users within the observable hemisphere (predominantly North and South America). This entire process takes about ten minutes.

Three previous satellite systems which provide conventional monitoring of the Earth are disclosed in U.S. Letters Patent Numbers 6 271 877, 6 331 870 and 6 504 570. In these three U.S. Patent Grants, LeCompte discloses methods and apparatus for collecting and distributing real-time, high resolution images of the Earth from Geostationary Orbit that includes an electro-optical sensor based on multi-megapixel two-dimensional charge coupled device (CCD) arrays mounted on a geostationary platform. At least four, three axis stabilized satellites in Geostationary Earth orbit provide worldwide coverage, excluding the poles. Data is collected at approximately one frame/second, and is broadcast over high-capacity communication links providing real-time global coverage of the Earth at sub-kilometer resolutions directly to end users.

US 6185037 discloses an optical reconnaissance system.

A satellite which would be able to produce an image of a full hemisphere of the Earth would provide "persistent" imaging. These images would be extremely useful, especially in the fields of weather monitoring and/or forecasting.

No known conventional commercial satellite currently provides persistent imaging, defined as once every thirty seconds or more often, of an entire observable hemisphere. No known current satellite provides high resolution of one hundred meters per pixel resolution in real-time.

### STATEMENT OF INVENTION

According to an aspect of the present invention, there is provided an image sensor for a geostationary orbiting satellite as claimed in claim 1.
At least a selected active imaging area of one focal plane array providing imaging coverage may abut that of an active imaging area of one or more of the other focal plane arrays.

At least a selected active imaging area of one focal plane array may provide imaging coverage overlapping that of an active imaging area of one or more of the other focal plane arrays.

The image sensor is preferably a staring sensor.

Each of said plurality of focal plane arrays may be connected to a field programmable gate array or to an application specific integrated circuit.

Each of said plurality of focal plane arrays may be connected to a sensor image control element; each of said sensor image control elements being configured to limit a light integration time of its associated focal plane array from one millisecond to ten seconds.

Each of said plurality of said sensor image control elements may be configured to set the number of frames per second delivered in the plurality of data from the plurality of focal plane arrays from a frame every ten seconds to twenty frames per second.

The image sensor may further comprise:
a sensor image readout element;
said sensor image readout element being configured to readout in parallel the image from each of the plurality of focal plane arrays.

The sensor image readout elements may be configured to transmit a maximum light level of each of said plurality of focal plane arrays to said sensor image control element.

The image sensor may further comprise an image processing element;
said image processing element including a plurality of software controlled electronic processing elements; said software controlled electronic processing elements being configured to receive the raw levels of said plurality of data from said plurality of focal plane arrays.

The image sensor may further comprise:
an electrically reactive high index of refraction material plate;
a sensor image control element;
said sensor image control element including a voltage control element;
said voltage control element being configured to apply a plurality of different voltages across
said electrically reactive high index of refraction material plate;
said electrically reactive high index of refraction material plate altering the direction of a plurality of light rays illuminating each of said plurality of focal plane arrays.

The plurality of images may be furnished for viewing at a remote location on Earth within not more than thirty seconds of the event being observed generally on the Earth.

One embodiment may be configured to produce a plurality of images substantially simultaneously from said telescope's field of view;
said plurality of images in combination providing a persistent image of at least a portion of said generally visible hemisphere of the surface of the planet;
said plurality of images each having resolutions that correspond with an image at Nadir having a resolution of at least a hundred meters.

The focal plane array may be connected to a field programmable gate array or ASIC.

The focal plane array may be connected to a sensor image control element;
said sensor image control elements being configured to limit a light integration time of its associated focal plane array from one microsecond to ten seconds.

The sensor image control element may be configured to set the number of frames per second delivered in the plurality of images from the focal plane array from a frame every ten seconds to twenty frames per second.

The image sensor may further comprise:
a sensor image readout element;
said sensor image readout element being configured to readout image data from said focal plane array.

The sensor image readout element may be configured to transmit a maximum light level of said focal plane array to said sensor image control element.

The image sensor may further comprise:
an image processing element;
said image processing element including a software controlled electronic processing element;
said software controlled electronic processing element being configured to receive the raw levels of said plurality of images from said plurality of focal plane array.

The planet may be the Earth, said plurality of images being furnished for viewing at a remote location on Earth within not more than thirty seconds of the event being observed generally on the Earth.

The image sensor may further comprise a shifting arrangement configured to controllably shift the field of view imaged by the telescope across the focal plane array in one or more dimensions whereby said focal plane array generates said plurality of images.

According to another aspect of the present invention, there is provided a method for providing satellite imaging as claimed in claim 13.

A geostationary satellite appears to remain motionless in orbit, because its orbit keeps it over the same region of the Earth's surface. The geostationary orbit (GSO) is contained in the Earth's Equatorial plane, and the revolution rate of the satellite in its orbit is the same as the rotational rate of the Earth. In this way, the motions of the Earth and the satellite are nulled.

The GSO is a distinct and specific subset of geosynchronous Earth orbit (GEO). A GEO orbit only has to be over the exact same spot on the Earth's surface once per day (i.e., that the satellite's orbit is synchronous with the Earth's rotation), while GSO orbits are such that the satellite appears to be continuously stationary in the sky above a specific spot on the Earth's Equator. Accordingly, consistent images may be taken of a portion of the Earth's surface and atmosphere that falls within the hemisphere of the Earth viewable by the GSO satellite, i.e, the observable hemisphere, which is typically referred to as the "footprint of the satellite." The observable hemisphere is not a full geographic hemisphere, i.e., not 50% of the Earth, as the GSO is too close to the Earth to see the extreme polar regions of the Earth, i.e., above +81.3 degrees latitude or below -81.3 degrees latitude.

Embodiments of the present invention seek to use a combination of elements to produce substantially full hemisphere images at medium to high resolution in thirty seconds or less. Preferably, embodiments of the present invention have an image rate that is in the order of a frame every ten seconds to on the order of several images per second.

Embodiments of the present invention use a "fractionated sensor" to take the hemispherical images all at once. In preferred embodiments, the minimum time to take a full observable hemispherical image is about one-fifth of a second. Embodiments seek to accomplish this by employing a combination of multiple telescopes, focal planes, and focal plane arrays as described below.

Embodiments do not need to "build up" or accumulate a full hemisphere image by using a scanning sensor. Instead, an image produced by embodiments of the present invention is assembled simultaneously from multiple imaging supplied from two-dimensional focal plane arrays that capture a field of view substantially simultaneously in parallel.

In preferred embodiments, the entire process, which begins when an event occurs, to the delivery to a user requires less than ten seconds.

Preferred embodiments can take the image of the entire observable hemisphere in as little as a few milliseconds with on satellite processing and transmission down to the ground taking well under a second. Even at night with longer exposures (in theory as long as 10 seconds) when including the onboard processing, the embodiments allow a complete hemispherical image every 10 seconds or less. As will be appreciated from the limitations of the physics alone, such speeds are not achievable with a scanning system.

Embodiments of the present invention seek to enable persistent imaging of said generally entire visible hemisphere of the surface of the Earth;
Preferably, each image captured by a telescope has a resolution that corresponds with an image at Nadir having at least one hundred meter resolution.

Embodiments enable substantially an entire hemisphere to be captured a minimum of 30 times more often (and as much as 600 times more often) than any other known system today.

One embodiment of the present invention includes an imaging sensor on a geostationary satellite having one or more co-collimated telescopes. The telescopes illuminate focal planes which are sparsely populated with focal plane arrays. The focal plane arrays are capable of recording the entire observable Earth hemisphere at one time, at least once every seconds or more often. Images are then transmitted to a user on Earth, who may observe the images in less than ten seconds after the recorded event happens on the surface of the Earth. This method seeks to provide persistent imaging of the Earth.

One embodiment of the present invention produces images within ten seconds from the time the event happens on the Earth. One embodiment of the invention is capable of making global observations of the Earth at one hundred meter scale or better spatial resolutions at nadir in real-time. In one particular implementation of the invention includes an imaging sensor on a geostationary satellite which is equipped with one or more co-collimated telescopes. The telescopes illuminate focal planes which are sparsely populated with focal plane arrays. The focal plane arrays are capable of recording the entire observable Earth hemisphere at one time, at least once every ten seconds or more often. Images are then transmitted to a user on Earth, who may observe the images in less than ten seconds after the recorded event happens on the surface of the Earth. This method provides persistent imaging an entire visible hemisphere of the Earth.

One embodiment of the present invention relates to methods and apparatus for producing high quality, real-time images of the Earth from a satellite in geosynchronous orbit. More particularly, one embodiment of the invention pertains to satellite imaging sensors and methods for generating recording, distributing, and displaying high-resolution images of a full visible hemisphere of the Earth in real-time.

Embodiments of the present invention may encompass various areas for substantially real-time image collection around the Earth, and subsequent data distribution of the collected images, including:
Creating and collecting real-time images and motion imagery.

An imaging infrastructure that allows image coverage of the majority of the planet in a true real-time, seamless fashion, concurrently at both high-resolution and moderate resolution.

Creating one or more selectable, high resolution motion imagery images within a larger high resolution motion imagery of the full observable Earth hemisphere while concurrently creating moderate resolution motion imagery of the full observable hemisphere.

Distributing true real-time images to the end users either through direct downlink, through other satellites, or through the Internet.

Ground processing of imagery and data may provide user requested imagery sets from the downlinked data. These data sets may be lower resolution imagery and data or lower update rates than the native system. Further this apparatus, system, and method may implement techniques to provide higher spatial resolution imagery than that produced by the native system.

One of a series of displays (e.g., a sphere with either internally or externally projected imagery, or a flat panel display with high pixel count) that display imagery allowing for the observer to see imagery or motion imagery generated and distributed by the other elements.

An appreciation of the other aims and objectives of the present invention, and a more complete and comprehensive understanding of this invention, may be obtained by studying the following description of a preferred embodiment, and by referring to the accompanying drawings.

### BRIEF DESCRIPTION OF THE DRAWINGS

Embodiments of the present invention will now be described, by way of example only, with reference to the accompanying drawings, in which:
Figure 1 is an illustration of a prior art system which employs a scanning mirror to direct light collected from the Earth's surface into imaging optics, and then onto a focal plane.
Figure 2 is a prior art device which scans the observable Earth disc.
Figure 3a is a schematic overview of one embodiment of the invention, which includes a satellite equipped with an array of image sensors and a transmitter.
Figure 3b is a schematic diagram of an image sensor according to one embodiment.
Figure 4 is a schematic overview of one embodiment the present invention, which includes an imaging sensor.
Figure 5 is a schematic overview of one portion of one embodiment of the present invention, which includes a single co-collimated telescope.
Figure 6 is a schematic overview of an alternative embodiment of a single co-collimated telescope.
Figure 7 is a schematic overview of four focal planes.
Figure 8 is a functional block diagram of the data and control flow between the image sensors and its corresponding focal plane.
Figure 9 is a functional block diagram of control devices for each focal plane array.
Figure 10 is a functional block diagram of the readout of each focal plane array.
Figure 11 is a functional block diagram of a method of processing images and data from the sensor image readout by the image processing element.
Figure 12 is a plate, which is made from an electrically reactive high index of refraction.
Figures 13A and 13B provide schematic diagrams of one embodiment of a pair of electrically reactive high index of refraction material plates.
Figure 14 is a schematic diagram of one embodiment of an imaging sensor showing a telescope and optical elements.
Figure 15 is a functional block diagram of the data and control flow between the image sensor and a software controlled focal plane array.

### DETAILED DESCRIPTION

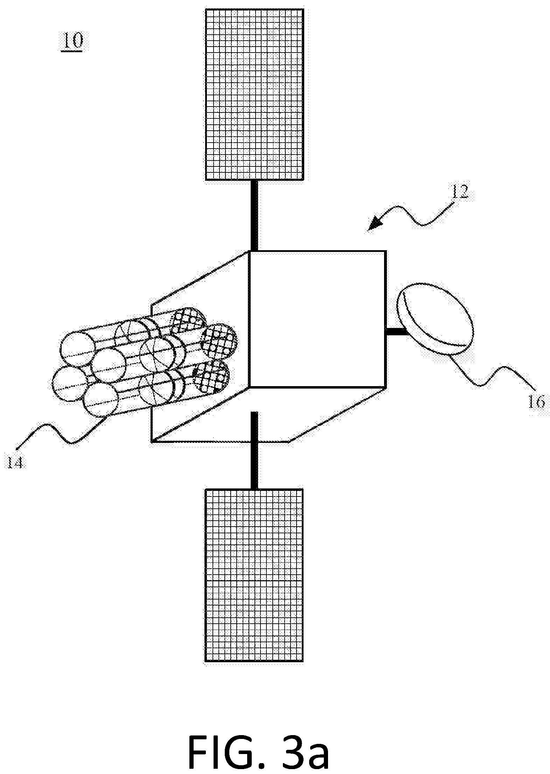

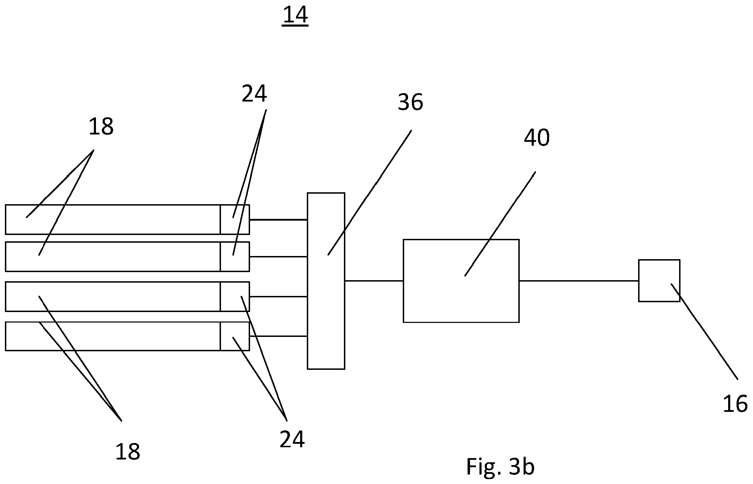

Figure 3a is a schematic view of an imaging system 10 according to an embodiment of the present invention. Figure 3b is a schematic diagram of an image sensor 14 suitable for use in the imaging system 10 of Figure 3a.

The imaging system 10 is mounted on a satellite 12 to be positioned in geostationary orbit. It includes a plurality of co-collimated telescopes 18.

In use, the co-collimated telescopes 18 are pointed at and focused upon substantially the same point (for example the same point on the earth). They each produce separate images of the field of view and pass this to the focal plane arrays 24.

The image sensor 14 uses the co-collimated telescopes 14 to direct images of the field of view onto corresponding focal planes 22 each having a focal plane array 24. The focal plane arrays (FPA) 24 are each sparsely populated upon the focal plane and capture portions of the image from the respective co-collimated telescope 14. The focal plane arrays 24 are configured as discussed below so that, in combination, they capture an image of a generally entire visible hemisphere of the surface of the planet being imaged by the telescopes 14. The focal plane arrays 24 in turn feed their captured images to a processor 40 via a sensor readout system 36 for assembly of the final image. The processor 40 is arranged to output the final image via a transmitter 16.

Preferably, the imaging system 10 operates in substantially real-time.

The optical properties of each telescope are preferably similar to ground based telescopes. They can range from moderate f# systems to "light gathering" systems with an f# that is less than 1.0. The telescopes can can have purely refractive elements, purely reflective elements, or a combination of the two (called a catadioptric system of elements).

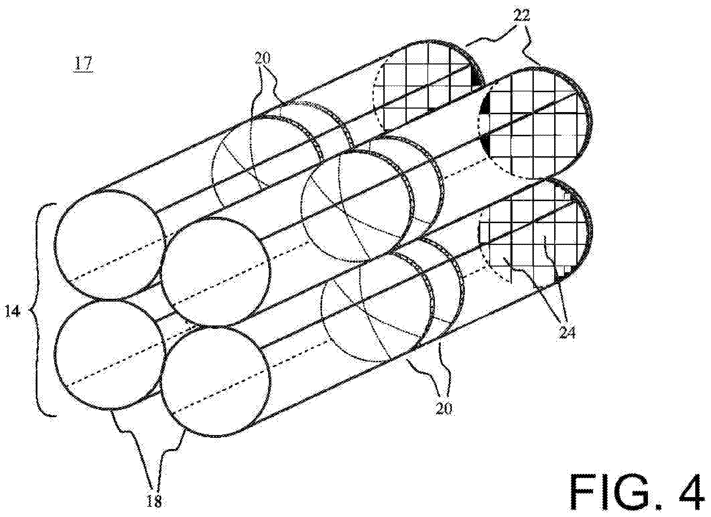

Figure 4 is a schematic diagram 17 of one embodiment of the image sensor 14. This embodiment includes four co-collimated telescopes 18, which each include refractive elements 20 focusing onto four focal planes 22, one for each co-collimated telescope 18.
Figure 4 shows focal plane arrays 24.

Alternative embodiments of the invention may include any number of telescopes, focal planes and focal plane arrays that include two or more of each.

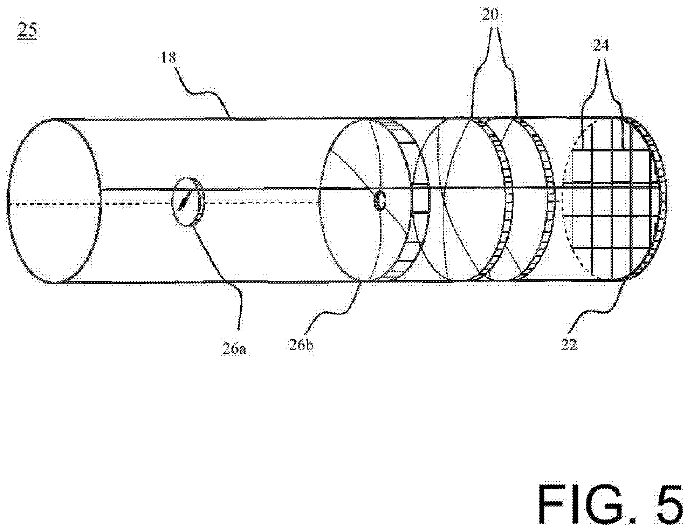

Figure 5 is a schematic diagram 25 of one embodiment of a single co-collimated telescope 18 that may be used in an image sensor 14. The telescope includes both reflective elements 26 and refractive elements 20 focusing onto a focal plane 22, which includes focal plane arrays 24.

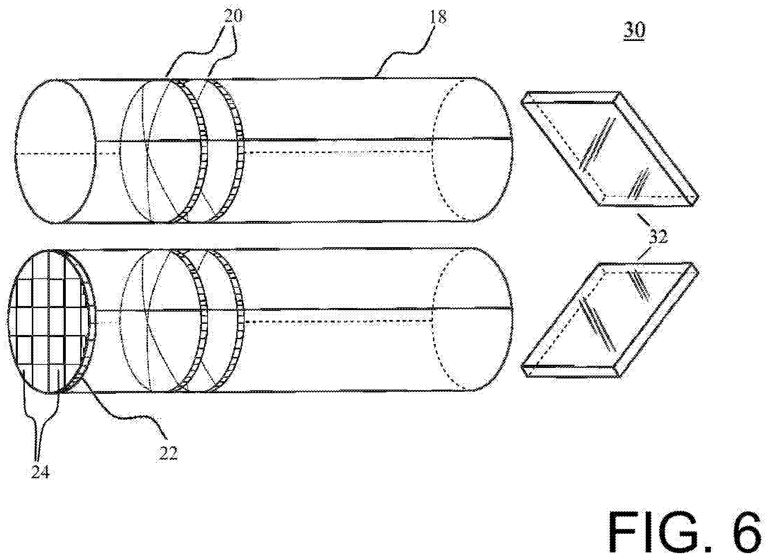

Figure 6 is a schematic diagram 30 of one alternate embodiment of a single co-collimated telescope 18 that may be used in an image sensor 14. The telescope includes reflective elements 26 and refractive elements 28 focusing onto a focal plane 22, which includes focal plane arrays 24. Two folding mirrors 32 are shown at the end of the telescopes, opposite the end containing the focal plane arrays 24.

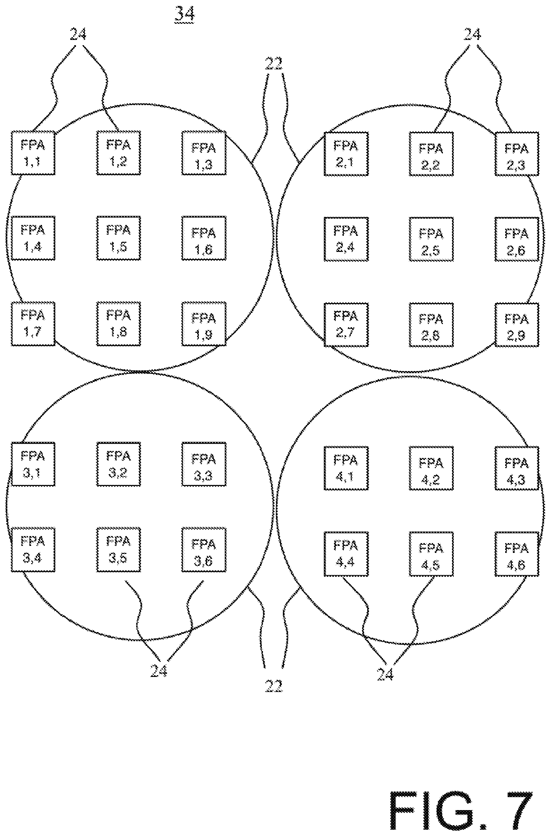

Figure 7 is a schematic diagram 34 illustrating focal plane arrays such as those used in the system of Figure 3a. The focal plane arrays of four focal planes 22 are shown, illustrating the sparse layout of focal plane arrays 24 across resulting from the four co-collimated telescopes 18 shown in Figure 4. By observing the same area (the observable hemisphere) with multiple telescopes, substantially the same image is created on the focal plane of each telescope. Only a portion of the Focal Plane Array chip is the active area 24 that actually captures images. The area around this active area is the supporting structure, supporting electronics, and such.

Substantially the same image is captured on multiple, independent focal planes from multiple, independent telescopes observing the same area. The active area of each focal plane array is considered during implementation and the overall imaging system 10 is designed such that the combined focal arrays have active areas that between them cover the full field of view. Images are captured in parallel from the co-collimated telescopes via their respective focal plane arrays and these images are then stitched together to result in an image covering substantially the entire field of view without the need for scanning or the like. Preferably, the active areas overlap so the processor 40 can use that overlap to guide the stitching of the full image.

When the final image is assembled in post processing, the image is composed of the active areas of the plurality of focal plane arrays 24 as if they were a single focal plane array.

The above described approach requires at least two telescopes co-collimated telescopes. Preferably, four co-collimated telescopes are used, although other numbers (odd or even) of co-collimated telescopes may be used subject to appropriate design of the focal plane array to capture substantially the entire field of view between them. In reality, if the chip supporting structures of the focal plane arrays are very large (as can happen with some specialty focal plane arrays in which the active area can be as small as 10% of the total area of the overall chip) then more than four telescopes can be required.

The arrangement illustrated in Figure 7 is one possible way of arranging the focal plane arrays across several telescopes. However, it will be appreciated that it is not the only possible arrangement.

The telescopes may be co-collimated at installation time and/or before or during operation. For example, alignment and focusing may be done while the satellite and sensor are on orbit using readout imagery and data from the FPAs and processed through the FPGAs. This can be done as a continuous or in place procedure with things like piezo electric crystals or magnetic/electronic inducers (such things are done with deformable optics today and this would be a different implementation of that). However, the implementation would make the overall sensor much more complex.

Because the imaging system will be utilized in geostationary orbit, preferably test equipment is utilized on the ground before launch to properly align and co-collimate the telescopes, focal planes, and focal plane arrays.

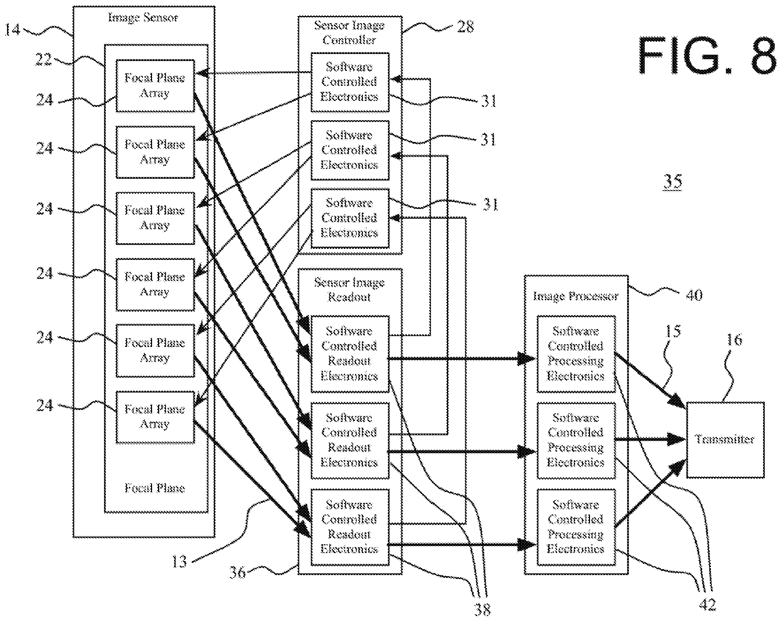

Figure 8 is a functional block diagram 35 of the data 13 and control flow among the image sensors 14 and various electronic components. The image sensors 14 each include a number of focal planes 22. Each focal plane 22 contains a number focal plane arrays 24. The focal plane arrays 24 are all connected to and controlled by a sensor image controller 28. The sensor image controller 28 uses software controlled electronics 31 to control the operations of each of the focal plane arrays 24. The focal plane arrays 24 are read out by the sensor image readout 36, which includes the software controlled readout electronic elements 38. The images and data from the focal plane arrays 24 are transferred to an image processor 40, which includes software controlled processing electronic elements 42. The software controlled readout electronics elements 38 transfers data to the software controlled electronics 31 of the sensor image controller 34 to optimize control functions. The software controlled processing electronic elements 42 of the image processor 40 transfer processed images 15 to transmitter 16.

Although in the simplest configuration, all the FPAs are identical, that does not have to be the case. One possible implementation (but much more complex than is shown in the figures) is in which each FPA shown in Figures 3 through 7 is replaced by a beam splitter stack. Such a stack is a long column of optical elements that divides the incoming light into various wavelength components (ultraviolet, blue, green, red, near infrared, mid wave, infrared, etc.). Then a set of specific FPAs each tuned to each of those wavelength groups could be configured to receive the subset of the imagery that would have been associated with each of those FPAs shown in Figure 7.

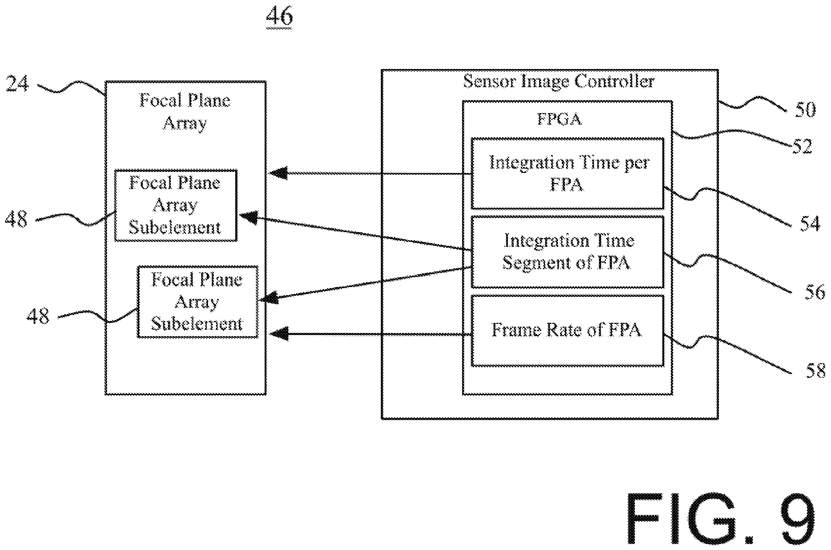

Figure 9 is a functional block diagram 46, which illustrates the method of the control of each focal plane array 24. Each focal plane array 24 includes focal plane array sub-elements 48. Each focal plane array 24 is controlled by a FPGA elements 52 within the sensor image controller 50 with sub-elements of the FPA 48 controlled by sub-elements of the FPGA 56, with FPGA sub-elements 54 and 58 controlling a full FPA, which as a set perform the following functions:
control integration time per FPA 54;
control integration time segment of FPA 56; and
control frame rate of FPA 58.

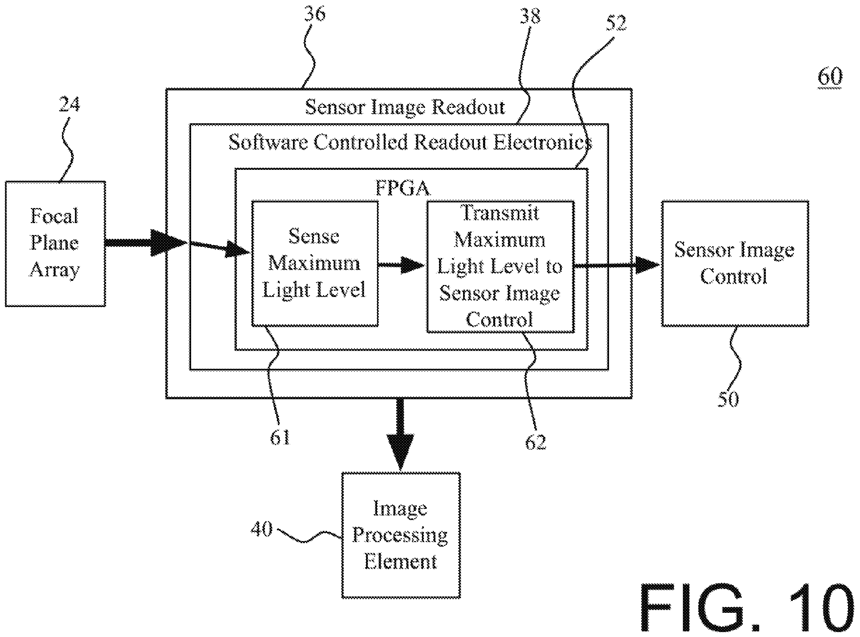

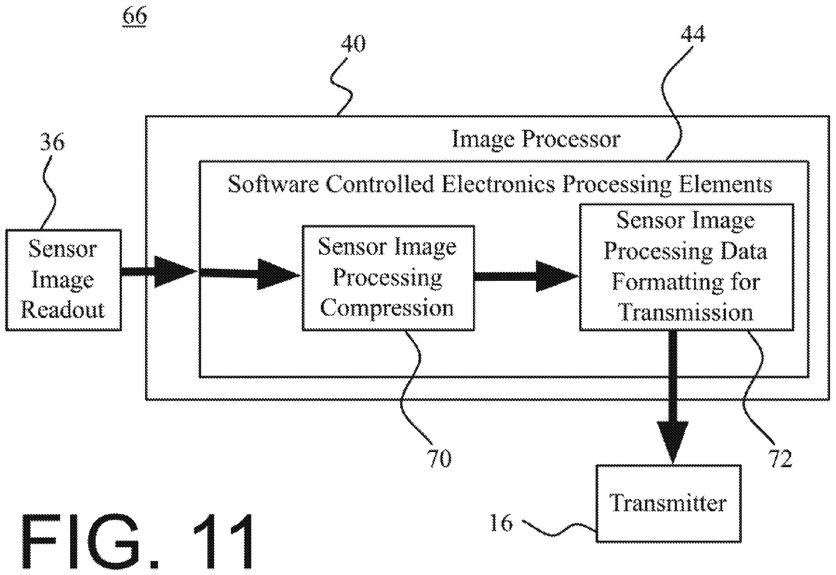

Figure 10 is a functional block diagram 60 of that shows the readout of each focal plane array 24 by the sensor image readout 36. Data is readout by the software controlled readout electronics 38, which includes a number of field programmable gate arrays 52. Each field programmable gate array 52 includes a sensor image readout that senses a maximum light level 61 and a sensor readout that transmits a maximum light level 62 to the sensor image control 50 to optimize image capture. Sensor image readout 36 transfers images and data from the focal plane array 24 to the image processing element 40.
Sensing and use of maximum light is an optional step that enables control of the sensor such that it should capture images such that the brightest object in the field of view just saturates the imaging pixel observing that brightest spot. That way, the image is not "blown out". The feedback loop from the readout electronics to the control electronics allows the sensor to maintain this optimal configuration. Figure 11 is a functional block diagram 66 of a method, which is used to process images and data from the sensor image readout 36 by the image processor 40. The image processor 40 includes software controlled electronics processing elements 44. The software controlled electronics processing elements 44 contain several modules for imagery and data processing including sensor image processing compression 70 and sensor image processing data formatting 72. The output of the sensor image processing data formatting 72 is conveyed to the transmitter 16.

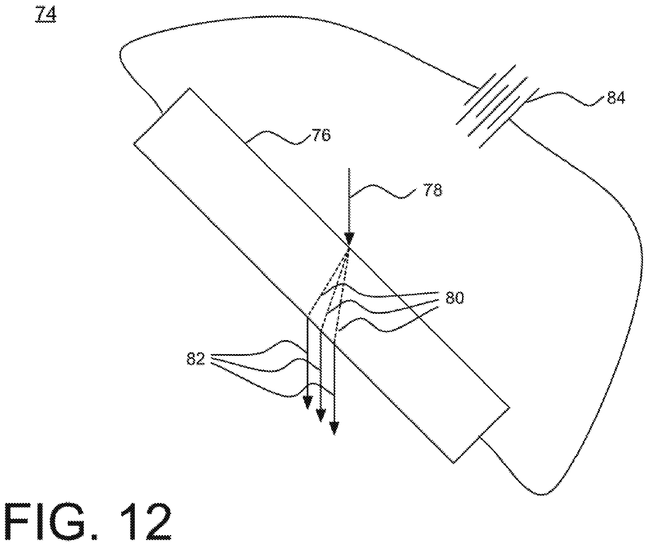

Figure 12 is a view 74 a plate 76. In this embodiment, the plate 76 is formed from an electrically
reactive high index of refraction material. Incident light beams 78 illuminate the plate 76. The incident
light 78 move through the plate 76, and propagates along any of multiple paths 80 to produce exiting rays
82, depending on the level of voltage placed across the plate 76 by voltage control element 84.

Shifting the image in two dimensions allows post processing to take a sequence of shifted images and create final images as if the pixels in the FPAs were smaller than they physically are. If the system shifts the image horizontally, then shifts if vertically, it's as if the pixels are 1/4 the size (half then half). Therefore, with a physical sensor that has physical pixels that give a native resolution of 100 meters with a doubly shifted system the imagery is effectively 50 meters giving 1/4 the physical area (2,500 square meters versus 10,000 square meters).

Shifting can also happen in smaller steps. With a build-up of eight images that are shifted by one fourth the pixel size the resolution can be 25 meters rather than 100 meters (625 square meters per pixel rather than 10,000 square meters per pixel).

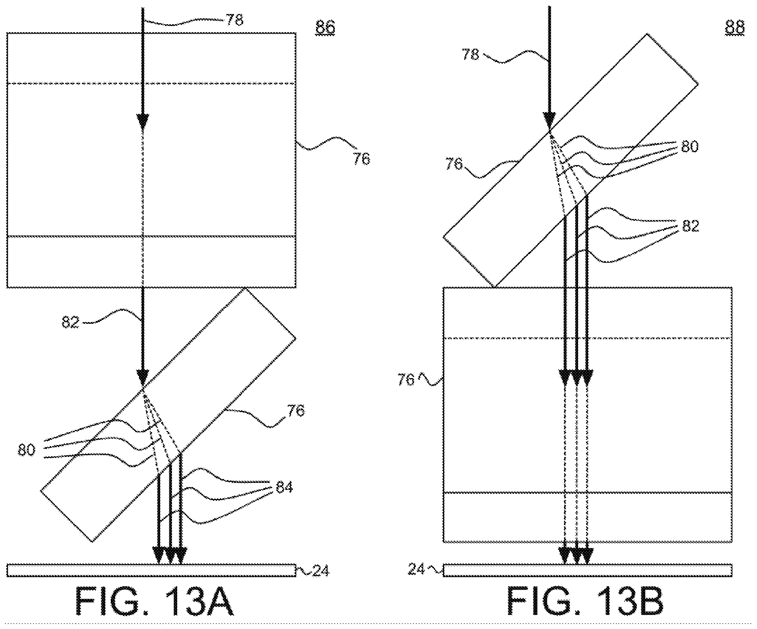

Figures 13A and 13B are schematic diagrams 86 and 88 of one embodiment of a pair of electrically reactive high index of refraction material plates 76. The plates 76 are shown oriented in two different directions, which allow the incident light rays 78 to change the shift of the exiting rays 84 in two dimensions through two shifts through electrically reactive high index of refraction material plates 76 each shown 80 with the first shift shown 82 and doubly shifted 84. Each dimension corresponds to one the electrically reactive high index of refraction material plates 76, and allows a resulting image formed on each focal plane array 24 to be actively shifted in two dimensions.

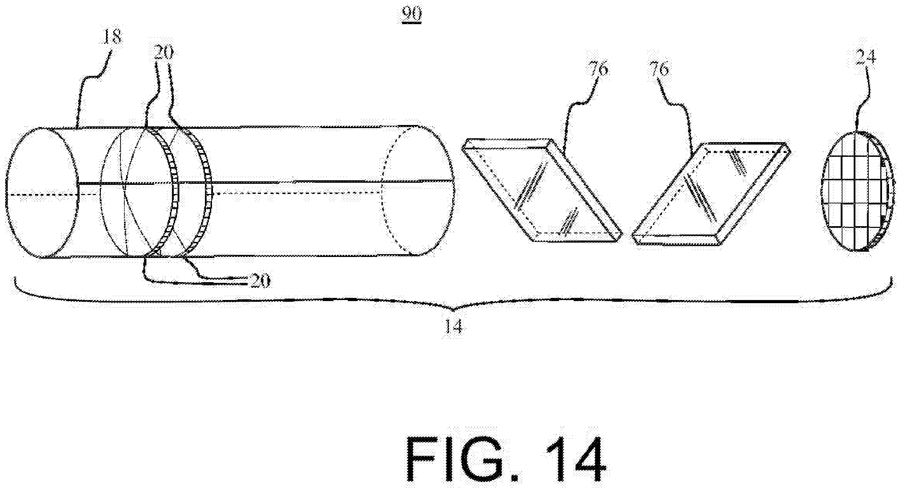

Figure 14 is a schematic diagram 90 of one embodiment of an imaging sensor 14 showing a telescope 18, which includes refractive elements 20, and a pair of electrically reactive high index of refraction material plates 76 that produce an image on focal plane array 24.

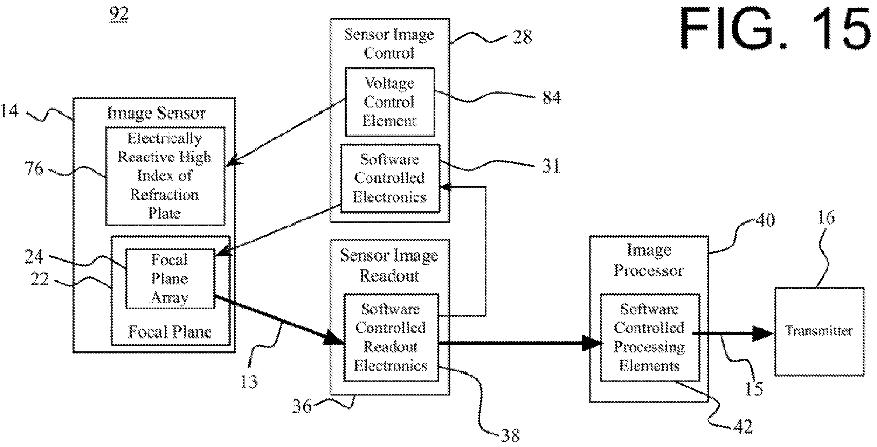

Figure 15 is a functional block diagram 92 of the data and control flow among an image sensor 14, a sensor image controller 28, a sensor image readout 36, an image processor 40 and a transmitter 16. The image sensor 14 includes a focal plane 22, which further includes a focal plane array 24. The image sensor 14 also includes an electrically reactive high index of refraction material plate 76. The image sensor 14 is connected to and controlled by the sensor image controller 28. The sensor image controller 28 includes a voltage control element 84 and software controlled electronics 31. The sensor image controller 28 is also connected to a sensor image readout 36, which includes software controller readout electronics 38, which reads out data 13. The output of the sensor image readout 16 is transferred to the image processor 40 containing software controlled processing elements 42 which in turn transfers processed the imagery and data 15 to the transmitter 16.

One embodiment of the present invention may be described as a series of events, as recited in
Table One:

**Table One**

| |
|---|
| Event happens |
| Light travels from the event to the satellite sensor |
| Light is captured by the sensor and stored as voltages |
| Voltages are read out of the sensor focal plane arrays, and processed on the satellite for transmission |
| Data are transmitted to the ground |
| The ground station receives the data stream and "unpacks" the data, and sends it to the ground processing site |
| The ground processing site takes the raw data and turns in into images |
| In parallel, the ground processing site extracts selected data from the images |
| The composed images are transferred to storage (for future use) and the distribution system |
| A distribution system (Internet, other communications satellites, etc.) delivers the live images to the user |

The present invention may be implemented in a wide variety of embodiments. Features of embodiments include, but are not limited to:
An imaging satellite with an image sensor including a focal plane array consisting of a charge coupled device (CCD) array
An imaging satellite with an image sensor including a focal plane array consisting of a complementary metal-oxide-semiconductor (CMOS) array
An imaging satellite with an image sensor including a focal plane array consisting of a scientific CMOS (SCMOS) array
An imaging satellite with an image sensor including a focal plane array consisting of a micro-bolometer (µ-bolometer) array
An imaging sensor with a focal plane array using a 2x2 2x3, 2x4, 3x3, 3x4, or 4x4 array of pixels with different filters to allow for the creation of full color imagery
An imaging sensor with a focal plane array using a stacked sensor such that it is capable of recording color in each individual pixel, e.g., a FOVEON Array
An imaging sensor with a primary image sensor comprised an optical train illuminating a focal plane array
An imaging sensor with primary image sensor comprised of a single optical train directly illuminating an optical beam splitters such that each split is for a different frequency and each split frequency illuminates a focal plane array
An imaging sensor comprised of a single optical train directly illuminating a diffraction grating such that each different frequency illuminates a focal plane arrays
An imaging sensor comprised of multiple co-collimated optical trains each directly illuminating a focal plane array as part of a matrix of focal plane arrays
An imaging sensor comprised of multiple co-collimated optical trains each directly illuminating a series of one or more optical beam splitters such that each split is for a different frequency and each split frequency illuminates a focal plane array
An imaging sensor observing and recording imagery and data of a cooperative target in real-time
An imaging sensor observing and recording imagery and data of a target on the Earth
An imaging sensor observing and recording imagery and data of a target in the Earth's atmosphere
An imaging sensor wherein a cooperative target is data linked to the satellite's primary ground station
An imaging sensor wherein the cooperative target is data linked to the satellite
An imaging sensor observing and recording imagery and data of a target in the Earth's orbit
An imaging sensor observing and recording imagery and data of a target in space out of the Earth's orbit
An imaging sensor wherein the cooperative target is data linked to the satellite's primary ground station
An imaging sensor wherein the cooperative target is data linked to the satellite
An imaging sensor wherein the imagery and data allows determination of the characteristics of a non cooperative target
A satellite has an additional image sensor
An imaging satellite with a pointing system configured to change a position of a narrow field of view image sensor with regard to the surface of the Earth so that the image sensor perceives different portions of the Earth's surface when producing data or a series of images
An imaging satellite with a pointing system that includes a gimbaled set wherein an optical telescope of a narrow field of view image sensor is pointed by adjusting the angle of the telescope relative to the body of the satellite
An imaging satellite with a pointing system that includes a control mechanism configured to control an amount of spin imparted by a momentum or reaction wheel on the satellite so as to impart a relative rotation of the satellite with respect to the Earth and cause an optical path of the image sensor to change with respect to a predetermined spot on the Earth
An imaging satellite with a sensor control and data processing system configured to semi-autonomously control a sensor, and produce either fixed resolutions
An imaging satellite with a sensor control and data processing system configured to semi-autonomously control a sensor, and produce either variable resolutions
An imaging satellite with a sensor control and data processing system configured to semi-autonomously control a sensor, and produce either fixed frame rates
An imaging satellite with a sensor control and data processing system configured to semi-autonomously control a sensor, and produce either variable frame rates
A sensor control and data processing system that monitors the saturation and pixel received energy levels of a sensor's focal plane array (FPA) and modifies the FPA's relevant operational parameters, to maximize the signal to noise ratio of the imagery generated
A sensor control system that monitors a predefined subset of the pixels of each FPA A sensor control system that monitors all of the pixels of each FPA
A sensor control and data processing system varies the frame rates of a FPA to optimize the imagery for transmission to the ground
A sensor control and data processing system that varies the frame rates of a FPAs to allow for optimal low light imaging of objects and events on the ground and in the atmosphere under low light conditions
A sensor control and data processing system that varies the frame rates of a plurality of FPAs to allow for optimal, concurrent high light imaging and low light imaging of objects and events on the ground and in the atmosphere under both high light and low light conditions
A sensor control and data processing system that varies the frame rates of sub sections of a FPA to allow for optimal, concurrent high light imaging and low light imaging of objects and events on the ground and in the atmosphere under both high light and low light conditions
A sensor control and data processing system producing imagery at full resolution of the entire observable hemisphere
A sensor control and data processing system that produces imagery at full resolution of the field of view of the additional image sensors
A data processing system combining imagery of full and lesser resolution images with the imagery from a narrow field image to provide data fused images
An imaging satellite with a sensor control and data processing system that is programmed at any time through communications links from the ground control systems to produce images of fixed resolution
An imaging satellite with a sensor control and data processing system that is programmed at any time through communications links from the ground control systems to produce images of variable resolutions
An imaging satellite with a sensor control and data processing system that is programmed at any time through communications links from the ground control systems to produce images of variable fixed frame rates
An imaging satellite with a sensor control and data processing system that is programmed at any time through communications links from the ground control systems to produce images of variable frame rate
A sensor control and data processing system with ground control systems monitoring the saturation and pixel received energy levels of a FPAs and modifying the FPAs' relevant operational parameters
A sensor control and data processing system commanded from the ground control systems to produce imagery at various resolutions
A data processing system as commanded from the ground control systems produces imagery at full resolution of the entire observable hemisphere
A processing system as commanded from the ground control systems produces imagery at full resolution of a select area of the observable hemisphere and reduced resolution imagery of the rest of the observable hemisphere
A data processing system wherein the imagery of full and lesser resolution images is processed at different frame rates to optimize the imagery for transmission to the ground
A data processing system wherein the imagery of full and lesser resolution images is processed at different resolution to optimize the imagery for transmission to the ground
A data processing system wherein the lesser resolution imagery and full resolution imagery is selectively stored for future recall
A data processing system wherein the imagery of full and lesser resolution images may be combined with the imagery from the narrow field imager to provide data fused images
An imaging satellite with a sensor control and data processing system that includes a data compression mechanism configured to compress the data before transmitting the data to a remote location
A data processing system of performing lossless compression
A data processing system of performing variable bit rate compression
A data processing system of performing lossy compression that preferentially is lossy in the lower order (least significant) bits of each pixel in an image
A data processing system of performing an industry standard motion imagery lossy compression algorithm
An imaging satellite with a transmitter is configured to transmit the data directly to a ground station
An imaging satellite with a transmitter is configured to transmit the data directly to a user remote location
An imaging satellite with a transmitter is configured to transmit the data directly to another imaging satellite to relay the imagery and data to a remote location
An imaging satellite with a transmitter is configured to transmit the data directly to a network node configured to relay the imagery and data to a remote location by way of another satellite
An imaging satellite with a transmitter is configured to transmit the data directly to a network node configured to relay said imagery and data to a remote location by way of the Internet
An imaging satellite wherein the imaging satellite is one satellite of a constellation of at least three similar satellites in GSO
An imaging satellite constellation the constellation supports imaging the same point on the Earth from more than one satellite of the constellation
An imaging satellite system with a ground processing system configured to create images and motion imagery of the imagery and data
A ground processing system configured to create images and full motion imagery in real-time
A ground processing system configured to create images and full motion imagery in live
A ground processing system performs data cumulation processing on the imagery to produce imagery of a quality better than the raw imagery
A ground processing system that performs super resolution processing techniques
A ground processing system derives trend or patterns of interest from the imagery and data
   A ground processing system that combines imagery from more than one satellite of a constellation
A ground data processing system combining imagery from more than one satellite producing higher resolution imagery than is transmitted down from a satellite
A ground data processing system combining imagery from more than one satellite to produce stereoscopic imagery
An imaging satellite system with a ground processing system configured to extract signatures of interest from of the imagery
A ground processing system that combines imagery from external sources to extract events of interest
A ground processing system combines imagery from external sources to extract patterns of interest
An imaging satellite system comprising a high resolution display that is a surface of a sphere
A high resolution display projected from the interior of a sphere onto the interior surface of that sphere
A high resolution display system that is a set of plurality of projectors located at or near the center of the sphere to project onto the interior of the sphere
A high resolution display system that includes a touch interface on the surface of the sphere to allow human interaction and direction of the way the imagery and data is displayed
A high resolution display that is projected from the exterior of a sphere onto the exterior surface of that sphere using one or more projectors

### Additional Implementations of the Invention

Embodiments of the present invention also enable the use of one or more sensors to provide true real-time observations of relevant areas on the surface of the Earth and the 200+ km region above the Earth's surface, including the Earth's atmosphere and up to 100 km above the atmosphere, under a wide range of lighting conditions that range from full, "high noon" sunlight, oblique sunlight, moonlight or starlight, as well as capturing man-made lighting conditions and natural light sources on the night side of the Earth.

Embodiments of the present invention further enables live coverage of geophysical phenomena from geostationary observation of the full, observable hemisphere at 100 meter nadir resolution, or better, based on very high spatial and temporal resolution of areas selectable from within the field of view of the entire hemisphere obviating the need for separate, additional cameras that are dedicated to high resolution, high frequency imagery. Embodiments of the present invention enables true real-time coverage of geophysical and man-made phenomena from geostationary observation at 25 meter resolution, or better, at nadir, based on very high spatial and temporal resolution of areas as large as 500 km by 500 km at nadir.

Embodiments of the present invention enables an ability to seamlessly monitor events over the entire observable hemisphere at one time-and with multiple geostationary platforms of at least three, but as many as desirable for maximum resolution, to provide seamless monitoring of events over the all but the far polar regions of the Earth.

In addition, embodiments of the present invention enables stereoscopic imaging from the above mentioned sensors when two or more satellites as described herein are positioned such that stereoscopic imagery of a given scene is practical. Imagery from these stereoscopic images may be processed to create 3D imagery of the observed areas.

Furthermore, embodiments of the present invention enables optimal imaging of both the daylight side and night side of the terminator, that area on the Earth that is the dividing line between day and night. Utilizing multiple focal plane arrays (FPAs) in the hemispherical sensors image field to image the full, observable hemisphere allows each FPA to be individually and independently optimized for the prevailing lighting conditions on the specific area of the Earth imaged by that specific FPA.

Embodiments of the present invention also enables the use of any number of any of full frame, rolling shutter, global shutter, interline transfer, or similar FPAs to image the entire observable hemisphere at one time with the worst case integration and read out, in the case of rolling shutter FPAs, being no worse than the integration and read out of a single FPA. This allows the image to be captured in much less time than if a single, extremely large FPA is used, or a scanning system is used, such that the worst case integration and read out is equivalent to the time for a single, large rolling shutter FPA. Though this highlighted part might want to go into the main description section as being able to optimally image both day and night concurrently is a major discriminator of the present invention.

Embodiments of the present invention also enables locating cooperative targets on the Earth or in space. This allows the systems to discern target radiance enhancement mechanisms to facilitate imaging by the satellite imaging systems augmented by mirrors, lasers or high intensity strobes.

This data may be distributed globally from each satellite through a system of space and ground telecommunication links. This information may be sent down to one or more ground stations, i.e., "downlinked", via the downlink transmitter 350 (e.g., a radio frequency (RF) or optical/laser, also known as "free space optics" (FSO), communications). Each satellite may include at least one RF communications transponder (for example, in one or more of S-, X-, Ka-, V-, Q-, E-, or W-bands) or FSO transponder for uplinks of commands and downlink of satellite health information. Additionally, each satellite includes one or more RF or FSO transmitters (in one or more of S-, X-, Ka-, V-, Q-, E-, or W-bands) that illuminates a footprint on the ground that allows the data to be broadcast directly to end users anywhere within the line of sight of the satellite.

For the RF implementation, the antenna may include any of a parabolic dish, a horn, and a phased array antenna that provides single beam or multi-beam coverage. For the FSO implementation, the telescopes may be steered to the recipient's ground site or a steering mirror within the FSO's optical system may point the FSO beam to the recipient's ground site.

The downlink bandwidth may be variable and based upon the imagery and data transmitted. If an RF downlink is implemented, the occupied RF bandwidth may be as little as 80 MHz, or as great as 1.5 GHz or more. The downlink data rate may run from 100 Mbps up through 500 Gbps or more. The information may be downlinked in one or more multiplexed data streams. The information may be received by the primary ground station or directly by end users not collocated with the primary ground station. The end users may receive the full data stream, or any fraction of the multiplexed data, allowing the end users to obtain the full hemispherical coverage, or any specific regional coverage.

The real-time data may be distributed beyond the initial imaging satellite's "line-of-sight" using leased transponder bandwidth on a network of at least one (but up through a possible total of six) commercial communications satellites, a terrestrial based data routing network, or a hybrid between the space-based and terrestrial-based communication assets. The real-time data is distributed beyond the initial imaging satellite's "line-of-sight" using any combination of these systems and methods.

Once the imagery is received at the ground site, the data may be distributed as raw data, processed into motion imagery (e.g., motion imagery streams, motion imagery loops of specified time lengths, either of which can be based upon all available imagery frames or decimated with a pre-defined number of frames skipped or with frames time averaged over several successive frames), or combined with data or imagery from other sensors in space, air, or ground collection points. Imagery may be combined in real-time or real-time imagery and data may be combined with archived data or imagery. Imagery may be combined in real-time with imagery or data from external sources or real-time imagery and data may be combined with archived data or imagery from external sources. Further, stored imagery from the downlinked real-time imagery may be combined with other imagery or data from other sources.

Processed imagery and data may include notifications of significant events. The events may be of natural phenomena, including, but not limited to, lightning events, hurricanes, tornadoes, wildfires, ice sheet caving, volcanic eruptions and plumes, algae blooms, and flash floods. In some embodiments, the events may be of man-made phenomena, including, but not limited to, rocket/missile launches, explosions, oil spills, rainforest fires, large ship wakes, aircraft movement, and man-made fires. Data associated with these phenomena, as well as the imagery associated with them, may be distributed to users as part of the imagery and data stream, or as a separate set of information. Processed imagery may result in feature or signature extraction data from the imagery itself, providing real-time or near real-time (e.g., real-time) notification of features of specific items such as man-made items. Processed imagery may result in moving target indications of objects smaller than that which may be imaged, but showing an object noticeably moving through the field of view.

Imagery and data may be displayed for user viewing utilizing standard two-dimensional flat or curved screens or projection systems. A globe may display imagery or data from one or more of the sensors mentioned above. Imagery may be down sampled for display with typical HDTV (2 million pixels), Digital Cinema 2K (2.2 million pixels), UHDTV (8.3 million pixels), Digital Cinema 4K (8.8 million pixels), SuperHiVision "8K" (33.2 million pixels), Digital Cinema 8K (35.4 million pixels), or higher resolutions to display a subset of the full motion imagery as the full set of the sensor's raw imagery may be on the order of 70 billion pixels or more for the full, observable globe. To display a fuller subset of the full motion imagery of the sensors, sets of these displays or projectors may be tiled. For example, images produced by individual Digital Cinema 8K equivalent projectors may be tiled in a four by nine array (utilizing 36 projectors) to provide an image of approximately 1.2 billion pixels.

Imagery may also be displayed onto, or within, the surface of a sphere or globe. The globe may display imagery or data from one or more of the sensors mentioned above. The imagery displayed on the globe may be "stitched" at the seams of the imagery and data from more than one satellite allowing for the appearance of a single, continuous image around the globe. The display system may perform the stitching and elimination of the bright bands where the projected images overlap.

In some embodiments, the sphere or globe may be small enough to sit on a desktop in a typical globe mounting, point mount or magnetically suspended above a base or between two magnets with relatively low resolution as poor as 1,000 pixels vertically by 3,600 pixels about the equator of the globe. In some embodiments, the globe may be many feet in diameter, and mounted so that people may walk around it, under it, or even above it, with motion imagery displayed at resolutions up through, or greater than, approximately 14,000 pixels vertically and approximately 50,000 about the equator of the globe. The globe may also be any practical size or projected resolution between those two limits.

One method of displaying full globe imagery is with a translucent or nearly clear sphere that is illuminated from the interior. A series of projectors at or near the center of the sphere may project the imagery onto the interior surface of the sphere. The projected images may be from a real-time stream, of one of the types of motion imagery loops described above, or a simulated set of imagery or animations. The images projected onto the inner surface of the screen may be of the full globe, or of a limited area of the globe.

The surface of the globe with the internal projected imagery may include a "touch screen" interface allowing the viewer to see significant events, detailed imagery or requested data on the globe by touching the surface of the globe. In some embodiments, the interface may be with a stylus, mouse or other pointing device. The viewer may expand one or more portions of the imagery on the globe through touch gestures on the globe itself. Expanded imagery may be higher resolution imagery of select areas, images or motion imagery of significant events, or a combination of the two. Additionally, the information within the expanded imagery may be selected through menus and icons presented on the globe itself by the interior imaging system. Further, the information within the expanded imagery may be selected through menus and icons on an alternate screen separate from the globe itself. Furthermore, the expanded imagery or data may be displayed on an alternate screen separate from the globe itself.

In some embodiments, a method of displaying the imagery may be by projection from the outside of the sphere through a series of exterior projections onto a reflective surface of the sphere. The surface may have a touch interface, as with the interior projection sphere, or be driven by a stylus or mouse, as described above. The surface may be capable of showing all the same imagery, image loops and data as discussed above with reference to the interior projection sphere.

Imagery and data from multiple satellites in a constellation may be combined to generate 3D images and data sets. These images and data sets may be viewed with monitors that support 3D data viewing. The resultant 3D data sets may be based, at least in part, upon real-time imagery and data, or a combination of real-time imagery and data and archive data and imagery, or data fused/combined with either real-time imagery or a combination of real-time imagery and data and archive data and imagery. The 3D imagery and data sets may be generated from imagery and data from a single satellite when combined with imagery or data sets from external sources.

In some embodiments, the imaging system may include a constellation of at least three such GSO systems (i.e., satellites) providing real-time coverage at approximately 500 meter resolution or better over the viewable Earth. Each satellite may provide a true real-time recording, and have the ability to downlink the imagery to a primary ground station or to end users within the line-of-sight of each satellite. In some embodiments, in order to augment the distribution capability for each sensing satellite, leased commercial communication satellite transponders may be employed to provide beyond line-of-sight communication to end users who are not in direct line-of-sight to the particular satellite that had the sensor from which the user is interested in viewing the images. In some embodiments, each Earth observing satellite may employ wideband down-link communication channels, and cross-linked inter-satellite communication conduits to accomplish the distribution function without the use of additional communication pipelines. In some embodiments, each Earth observing satellite may employ wideband down-link communication channels that are directly distributed to end users through the Internet.

It is to be appreciated that certain embodiments of the invention as discussed below may be incorporated as code (e.g., a software algorithm or program) residing in firmware and/or on computer useable medium having control logic for enabling execution on a computer system having a computer processor. Such a computer system typically includes memory storage configured to provide output from execution of the code which configures a processor in accordance with the execution. The code can be arranged as firmware or software, and can be organized as a set of modules such as discrete code modules, function calls, procedure calls or objects in an object-oriented programming environment. If implemented using modules, the code can comprise a single module or a plurality of modules that operate in cooperation with one another.

### V. Glossary

### ASIC, Application Specific Integrated Circuit

An integrated circuit (IC) designed, customized, and implemented for a particular use, rather than a generic designed IC intended for general-purpose use.

### CCD, Charge Coupled Device Array

An image sensor implementing the movement of charge resulting from light falling onto the sensor's surface to another area of the device for readout.

### CMOS Array, Complementary Metal-Oxide-Semiconductor Array

An image sensor implementing created using the same technologies as used to create typical integrated circuits (IC) chips.

### Co-collimated Telescopes

A set of two or more telescopes wherein all telescopes in the set are continuously pointed at, and focused, on the exact same point (for example a region or object).

### Data Cumulation

A method of combining the data from multiple images to enhance the signal to noise ratio in the resulting image.

### DSB-S2x, Digital Video Broadcasting - Satellite, Second Generation Extended

An industry standard Radio Frequency (RF) waveform modulation that implements a spectrally efficient, very high data and information rate communications.

### Electronically Controllable High Refractive Index Material

A material that changes its index of refraction, and by this the path of light going through it, based upon the electrical voltage levels placed across the material.

### FPGA, Field Programmable Gate Array

An integrated circuit designed to be configured by a customer or a designer after manufacturing - hence "field-programmable". The FPGA configuration is generally specified using a hardware description language (HDL). FPGAs can have their "programming" changed even after they are in an operational system such as a satellite already on orbit.

### Focal Plane

The surface onto which an optical system, e.g., a telescope, focuses an image. A Focal Plane may be an imaginary surface in three dimensional space or the surface may be composed of one or more FPAs.

### Focal Plane Array (FPA)

An array of elements, typically but not exclusive, within a single integrated circuit chip, designed to receive light and convert that light into electrical charges that can then be read out.

### Frame Rate

The number of images (frames) recorded and read out by the image sensor per second. As an example, he standard frame rate in the U.S. for "full HDTV" is 30 frames per second.

### Geostationary Orbit (GSO)

The orbit in the same plane as the Earth's equator at which an object in this orbit revolves around the Earth at the exact same rate as the Earth rotates on its axis. This is approximately 35,786 km above the Earth's surface at the equator. A Geostationary Orbit is a special case of a geosynchronous orbit.

### Geosynchronous Orbit (GEO)

The orbit in which an object, such as a satellite, takes 24 hours to revolve around the Earth. This orbit has the object pass over the same point on the surface of the Earth every data at the same time every day.

### Image

An electronically recorded picture or representation that may be from a single FPA, a picture or representation from fraction of a single FPA, or a composite of the pictures or representations from multiple FPAs. Such images may, or may not, be contiguous in time or in spatial layout.

### Motion Imagery

A sequence of images as defined herein that are ordered in time to show a series, succession, or progression of events or changes in the imagery over time. The time ordering may be ordered in a single step size, or time interval between successive images, or multiple step sizes that vary over series of images.

### Real-time

For the purposes of this patent application, real-time is defined as the end user being able to see an event in less than 30 seconds after the event occurs including the aggregate of all durations for:
light to get from the event to the sensor,
the sensor to capture the light and create an electronic image,
the sensor readout,
the read out data processing,
the transmission to a ground processing site,
ground processing,
distribution to the end user, and
end user display.

### CONCLUSION

Although the present invention has been described in detail with reference to one or more preferred embodiments, persons possessing ordinary skill in the art to which this invention pertains will appreciate that various modifications and enhancements may be made without departing from the scope of the claims that follow. The various alternatives that have been disclosed above are intended to educate the reader about preferred embodiments of the invention, and are not intended to constrain the limits of the invention or the scope of the claims.

The various embodiments described above disclose features that can optionally be combined in a variety of ways depending on the desired implementation. Since the features described are modular, other embodiments based on different combinations of features are also possible without departing from the scope of the claims.

### INDUSTRIAL APPLICABILITY

The above description seeks to provide methods and apparatus for providing real time images of full visible hemispheres of the Earth; and seeks to provide a valuable system for industries which require images for weather forecasting.

### LIST OF REFERENCE CHARACTERS

- ED: Earth's disc
- ES: Earth's surface
- FP: Focal plane
- IO: Imaging optics
- L: Light rays
- SC1: First scan
- SC2: Second scan
- SC3: Third scan
- SC4: Fourth scan
- SM: Scanning mirror
- SR: Scan retrace

- 10: Real-time Satellite Imaging System
- 12: Satellite
- 13: Imagery Data
- 14: Image Sensor
- 15: Processed Images
- 16: Transmitter
- 17: Diagram Image Sensor
- 18: Co-collimated Telescopes
- 20: Refractive Elements
- 22: Focal Planes
- 24: Focal Plane Arrays
- 25: Diagram Single Telescope
- 26: Reflective Elements
- 28: Image Sensor Controller
- 30: Diagram Folded Telescope
- 31: Software Controlled Electronics Controller
- 32: Folding Mirrors
- 34: Diagram 4 Focal Planes
- 35: Functional Block Diagram
- 36: Image Sensor Readout
- 38: Software Controlled Readout Electronics
- 40: Image Processor
- 42: Software Controlled Processing Electronics
- 44: Software controlled electronics processing elements
- 46: Functional Block Diagram Controller
- 48: Focal Plane Array Sub Elements
- 50: Sensor Image Controller
- 52: FPGA
- 54: Integration time per FPA
- 56: Integration time Segment of FPA
- 58: Frame Rate of FPA
- 60: Functional Block Diagram Readout
- 61: Sense Maximum Light Level
- 62: Transmit Max Light Level to Sensor Image Control
- 66: Functional Block Diagram Image Processing
- 70: Sensor Image Processing Compression
- 72: Sensor Image Processing Data Formatting for Transmission
- 74: View of a Plate
- 76: Plate
- 78: Incident Light
- 80: Multiple Internal Paths
- 82: Exit Rays
- 84: Voltage Control Element
- 86: Schematic of two plates LEFT view
- 88: Schematic of two plates RIGHT view
- 90: Schematic of telescope with two plates
- 92: Block Diagram of optical system with plates

## Claims

1. An image sensor (14) for a geostationary orbiting satellite (10) including:
a plurality of co-collimated telescopes (18) having substantially the same field of view of a planet when mounted on the geostationary orbiting satellite (10);
each telescope (18) including a respective focal plane (22), each focal plane (22) containing a plurality of focal plane arrays (24), **characterized in that** the respective focal plane arrays (24) are sparsely populated upon their respective focal plane (22) wherein the active areas of the sparsely populated focal plane arrays (24) of all the telescopes (18) are positioned to cover, for a point in time, a substantially contiguous field of view between them, each of the plurality of co-collimated telescopes (18) being arranged to direct its image onto the respective focal plane (22) to capture a single image of a generally entire visible hemisphere of the surface of the planet across its sparsely populated focal plane arrays (24),
wherein the image sensor (14) is configured to capture an image via each telescope (18) in parallel and assemble the captured images to produce a single image covering the substantially contiguous field of view.

2. The image sensor (14) of claim 1, wherein at least a selected active imaging area of one focal plane array (24) provides imaging coverage abutting that of an active imaging area of one or more of the other focal plane arrays (24).

3. The image sensor (14) of claim 2, wherein at least a selected active imaging area of one focal plane array (24) provide imaging coverage overlapping that of an active imaging area of one or more of the other focal plane arrays (24).

4. An image sensor (14) as claimed in any preceding claim, in which
each of said plurality of focal plane arrays is connected to a sensor image control element (28);
each of said sensor image control elements (28) is configured to limit a light integration time of its associated focal plane array (24) from one millisecond to ten seconds.

5. An image sensor (14) as claimed in claim 4, in which
each of said plurality of said sensor image control elements (28) are configured to set a number of frames per second delivered in a plurality of data from the plurality of focal plane arrays (24) from a frame every ten seconds to twenty frames per second.

6. An image sensor (14) as claimed in any preceding claim, further comprising:
a sensor image readout element (36);
said sensor image readout element (36) being configured to readout in parallel the image from each of the plurality of focal plane arrays (24).

7. An image sensor (14) as claimed in claim 6 when dependent on claim 5, in which said sensor image readout elements (36) are configured to transmit a maximum light level of each of said plurality of focal plane arrays (24) to said sensor image control element (28).

8. An image sensor (14) as claimed in claim 5 or 7 or in claim 6 when dependent on claim 5, further comprising:
an image processing element (40);
said image processing element (40) including a plurality of software controlled electronic processing elements (44);
said software controlled electronic processing elements (44) being configured to receive raw imagery in said plurality of data from said plurality of focal plane arrays (24).

9. An image sensor (14) as claimed in any preceding claim when dependent on claim 4, further comprising:
an electrically reactive high index of refraction material plate (76);
said sensor image control element (28) including a voltage control element (84);
said voltage control element (84) being configured to apply a plurality of different voltages across said electrically reactive high index of refraction material plate (76);
said electrically reactive high index of refraction material plate (76) altering the direction of a plurality of light rays illuminating each of said plurality of focal plane arrays (24).

10. An image sensor (14) as claimed in any preceding claim, further comprising a sensor control and data processing system arranged to monitor saturation and received pixel energy levels of each focal plane array and modify operation parameters of the respective focal plane array to maximize signal to noise ratio of the imagery generated.

11. An image sensor (14) as claimed in claim 10, wherein the sensor control and data processing system is arranged to individually optimize each focal plane array (24) for prevailing light conditions of the imaged field of view independently of others of the focal plane arrays (24).

12. An image sensor (14) as claimed in claim 11, wherein the sensor control and data processing system is arranged to control the respective focal plane array (24) to capture images such that the brightest object in the field of view just saturates the imaging pixel observing the brightest spot.

13. A method for providing satellite imaging including:
providing an image sensor (14) including a plurality of co-collimated telescopes (18) for mounting to a satellite to be placed in geostationary orbit, wherein the co-collimated telescopes (14) have substantially the same field of view of a planet when the satellite is in geostationary orbit, each telescope (18) including a respective focal plane (22), **characterized in that** each focal plane (22) contains a plurality of focal plane arrays (24), the respective focal plane arrays (24) being sparsely populated upon their respective focal plane (22) wherein the active areas of the sparsely populated focal plane arrays (24) of all the telescopes (18) are positioned to cover, for a point in time, a substantially contiguous field of view between them;
directing an image from each of the plurality of co-collimated telescopes (18) onto the respective focal plane (22) to capture a single image of a generally entire visible hemisphere of the surface of the planet across its sparsely populated focal plane arrays (24);
generating data representing at least a portion of the respective image at the respective focal plane array (24); and,
combining the generated data to form an image of a generally entire visible hemisphere of the surface of the planet, wherein the image sensor (14) is configured to capture an image via each telescope (18) in parallel and assemble the captured images to produce a single image covering the substantially contiguous field of view.

## Patentansprüche

1. Bildsensor (14) für einen geostationären umlaufenden Satelliten (10), umfassend:
eine Vielzahl von co-kollimierten Teleskopen (18), die im Wesentlichen das gleiche Sichtfeld eines Planeten haben, wenn sie auf dem geostationären umlaufenden Satelliten (10) montiert sind;
wobei jedes Teleskop (18) eine jeweilige Fokalebene (22) umfasst, wobei jede Fokalebene (22) eine Vielzahl von Fokalebenen-Arrays (24) enthält, **dadurch gekennzeichnet, dass** die jeweiligen Fokalebenen-Arrays (24) auf ihrer jeweiligen Fokalebene (22) spärlich bestückt sind, wobei die aktiven Bereiche der spärlich bestückten Fokalebenen-Arrays (24) aller Teleskope (18) so positioniert sind, dass sie zu einem Zeitpunkt ein im Wesentlichen zusammenhängendes Sichtfeld zwischen ihnen abdecken, wobei jedes der Vielzahl von co-kollimierten Teleskope (18) so angeordnet ist, dass es sein Bild auf die jeweilige Fokalebene (22) richtet, um ein einzelnes Bild einer im Allgemeinen gesamten sichtbaren Hemisphäre der Oberfläche des Planeten über seine spärlich bestückten Fokalebenen-Arrays (24) aufzunehmen,
wobei der Bildsensor (14) so konfiguriert ist, dass er über jedes Teleskop (18) parallel ein Bild erfasst und die erfassten Bilder zusammensetzt, um ein einzelnes Bild zu erzeugen, das das im Wesentlichen zusammenhängende Sichtfeld abdeckt.

2. Bildsensor (14) nach Anspruch 1, wobei mindestens ein ausgewählter aktiver Abbildungsbereich eines Fokalebenen-Arrays (24) eine Abbildungsabdeckung bereitstellt, die an die eines aktiven Abbildungsbereichs eines oder mehrerer der anderen Fokalebenen-Arrays (24) angrenzt.

3. Bildsensor (14) nach Anspruch 2, wobei mindestens ein ausgewählter aktiver Abbildungsbereich eines Fokalebenen-Arrays (24) eine Abbildungsabdeckung bereitstellt, die an diejenige eines aktiven Abbildungsbereichs eines oder mehrerer der anderen Fokalebenen-Arrays (24) angrenzt.

4. Bildsensor (14) nach einem der vorhergehenden Ansprüche, bei dem jedes der mehreren Fokalebenen-Arrays mit einem Sensor-Bildsteuerelement (28) verbunden ist;
wobei jedes der Sensor-Bildsteuerelemente (28) so konfiguriert ist, dass es eine Lichtintegrationszeit seines zugehörigen Fokalebenen-Arrays (24) von einer Millisekunde bis zehn Sekunden begrenzt.

5. Ein Bildsensor (14) nach Anspruch 4, bei dem
jedes der Vielzahl der Sensor-Bildsteuerelemente (28) konfiguriert ist, um eine Anzahl von Bildern pro Sekunde, die in einer Vielzahl von Daten von der Vielzahl von Fokalebenen-Arrays (24) geliefert werden, von einem Bild alle zehn Sekunden bis zwanzig Bilder pro Sekunde einzustellen.

6. Bildsensor (14) nach einem der vorhergehenden Ansprüche, der ferner aufweist:
ein Sensorbildausleseelement (36);
wobei das Sensorbildausleseelement (36) so konfiguriert ist, dass es das Bild von jedem der Vielzahl von Fokalebenen-Arrays (24) parallel ausliest.

7. Bildsensor (14) nach Anspruch 6, wenn er von Anspruch 5 abhängig ist, bei dem die Sensor-Bildausleseelemente (36) so konfiguriert sind, dass sie einen maximalen Lichtpegel von jedem der Vielzahl von Fokalebenen-Arrays (24) an das Sensor-Bildsteuerelement (28) übertragen.

8. Bildsensor (14) nach Anspruch 5 oder 7 oder nach Anspruch 6, wenn dieser von Anspruch 5 abhängt, der ferner aufweist:
ein Bildverarbeitungselement (40);
wobei das Bildverarbeitungselement (40) eine Vielzahl von softwaregesteuerten elektronischen Verarbeitungselementen (44) umfasst;
wobei die softwaregesteuerten elektronischen Verarbeitungselemente (44) konfiguriert sind, um Rohbilder in der Vielzahl von Daten von der Vielzahl von Fokalebenen-Arrays (24) zu empfangen.

9. Bildsensor (14) nach einem der vorhergehenden Ansprüche, wenn er von Anspruch 4 abhängig ist, der ferner aufweist:
eine elektrisch reaktive Platte aus einem Material mit hohem Brechungsindex (76);
wobei das Sensorbildsteuerelement (28) ein Spannungssteuerelement (84) umfasst;
wobei das Spannungssteuerelement (84) so konfiguriert ist, dass es eine Vielzahl von unterschiedlichen Spannungen über die elektrisch reaktive Platte (76) aus Material mit hohem Brechungsindex anlegt;
wobei die elektrisch reaktive Materialplatte (76) mit hohem Brechungsindex die Richtung einer Vielzahl von Lichtstrahlen ändert, die jedes der Vielzahl von Fokalebenen-Arrays (24) beleuchten.

10. Bildsensor (14) nach einem der vorhergehenden Ansprüche, die ferner ein Sensorsteuerungs- und Datenverarbeitungssystem aufweist, das so arrangiert ist, dass es die Sättigung und die Energiepegel empfangener Pixel jedes Fokalebenen-Arrays überwacht und die Betriebsparameter der jeweiligen Fokalebenen-Array modifiziert, um das Signal-Rausch-Verhältnis der erzeugten Bilder zu maximieren.

11. Bildsensor (14) nach Anspruch 10, wobei das Sensorsteuerungs- und Datenverarbeitungssystem so arrangiert ist, dass es jedes Fokalebenen-Array (24) für die vorherrschenden Lichtbedingungen des abgebildeten Sichtfeldes unabhängig von anderen der Fokalebenen-Arrays (24) individuell optimiert.

12. Bildsensor (14) nach Anspruch 11, wobei das Sensorsteuerungs- und Datenverarbeitungssystem so arrangiert ist, dass es das jeweilige Fokalebenen-Array (24) so steuert, dass es Bilder so aufnimmt, dass das hellste Objekt im Sichtfeld das abbildende Pixel, das den hellsten Punkt beobachtet, gerade sättigt.

13. Verfahren zum Bereitstellen von Satellitenbildern, umfassend Bereitstellen eines Bildsensors (14) mit einer Vielzahl von co-kollimierten Teleskopen (18) zum Montieren an einem Satelliten, der in eine geostationäre Umlaufbahn gebracht werden soll, wobei die co-kollimierten Teleskope (14) im Wesentlichen das gleiche Sichtfeld auf einen Planeten haben, wenn sich der Satellit in einer geostationären Umlaufbahn befindet, wobei jedes Teleskop (18) eine jeweilige Fokalebene (22) aufweist, **dadurch gekennzeichnet, dass** jede Fokalebene (22) eine Vielzahl von Fokalebenen-Arrays (24) enthält, wobei die jeweiligen Fokalebenen-Arrays (24) auf ihrer jeweiligen Fokalebene (22) spärlich bestückt sind, wobei die aktiven Bereiche der spärlich bestückten Fokalebenen-Arrays (24) aller Teleskope (18) so positioniert sind, dass sie zu einem Zeitpunkt ein im Wesentlichen zusammenhängendes Sichtfeld zwischen ihnen abdecken;
Richten eines Bildes von jedem der mehreren co-kollimierten Teleskope (18) auf die jeweilige Fokalebene (22), um ein einzelnes Bild einer im Allgemeinen gesamten sichtbaren Hemisphäre der Oberfläche des Planeten über ihre spärlich bestückten Fokalebenen-Arrays (24) aufzunehmen;
Erzeugen von Daten, die zumindest einen Teil des jeweiligen Bildes in dem jeweiligen Fokalebenen-Array (24) darstellen; und
Kombinieren der erzeugten Daten, um ein Bild einer im Allgemeinen gesamten sichtbaren Hemisphäre der Oberfläche des Planeten zu bilden, wobei der Bildsensor (14) so konfiguriert ist, dass er ein Bild über jedes Teleskop (18) parallel erfasst und die erfassten Bilder zusammensetzt, um ein einzelnes Bild zu erzeugen, das das im Wesentlichen zusammenhängende Sichtfeld abdeckt.

## Revendications

1. Capteur d'image (14) pour un satellite en orbite géostationnaire (10) comprenant :
une pluralité de télescopes co-collimatés (18) ayant sensiblement le même champ de vision d'une planète une fois montés sur le satellite en orbite géostationnaire (10) ;
chaque télescope (18) comprenant un plan focal respectif (22), chaque plan focal (22) contenant une pluralité de matrices plan focal (24), **caractérisé par le fait que** les matrices plan focal respectives (24) sont disposées de manière clairsemée sur leur plan focal respectif (22), les zones actives des matrices plan focal disposées de manière clairsemée (24) de tous les télescopes (18) étant positionnées pour couvrir, pour un moment donné, un champ de vision sensiblement contigu entre elles, chacun de la pluralité de télescopes co-collimatés (18) étant agencé pour diriger son image sur le plan focal respectif (22) pour capturer une seule image d'un hémisphère visible généralement entier de la surface de la planète sur tous ses matrices plan focal disposées de manière clairsemée (24) ,
le capteur d'image (14) étant configuré pour capturer une image par l'intermédiaire de chaque télescope (18) en parallèle et assembler les images capturées pour produire une seule image couvrant le champ de vision sensiblement contigu.

2. Capteur d'image (14) selon la revendication 1, dans lequel au moins une zone d'imagerie active sélectionnée d'une matrice plan focal (24) fournit une couverture d'imagerie contiguë à celle d'une zone d'imagerie active d'une ou plusieurs des autres matrices plan focal (24).

3. Capteur d'image (14) selon la revendication 2, dans lequel au moins une zone d'imagerie active sélectionnée d'une matrice plan focal (24) fournit une couverture d'imagerie chevauchant celle d'une zone d'imagerie active d'une ou plusieurs des autres matrices plan focal (24).

4. Capteur d'image (14) selon l'une quelconque des revendications précédentes, dans lequel
chacune de ladite pluralité de matrices plan focal est reliée à un élément de commande d'image de capteur (28) ; et
chacun desdits éléments de commande d'image de capteur (28) est configuré pour limiter un temps d'intégration de lumière de sa matrice plan focal associée (24), d'une milliseconde à dix secondes.

5. Capteur d'image (14) selon la revendication 4, dans lequel
chacun de ladite pluralité desdits éléments de commande d'image de capteur (28) est configuré pour définir un nombre d'images par seconde délivrées dans une pluralité de données provenant de la pluralité de matrices plan focal (24), d'une image toutes les dix secondes à vingt images par seconde.

6. Capteur d'image (14) selon l'une quelconque des revendications précédentes, comprenant en outre :
un élément de lecture d'image de capteur (36) ;
ledit élément de lecture d'image de capteur (36) étant configuré pour lire en parallèle l'image de chacune de la pluralité de matrices plan focal (24).

7. Capteur d'image (14) selon la revendication 6 lorsque prise en dépendance de la revendication 5, dans lequel lesdits éléments de lecture d'image de capteur (36) sont configurés pour transmettre un niveau de lumière maximal de chacune de ladite pluralité de matrices plan focal (24) audit élément de commande d'image de capteur (28) .

8. Capteur d'image (14) selon la revendication 5 ou 7 ou selon la revendication 6 lorsque prise en dépendance de la revendication 5, comprenant en outre :
un élément de traitement d'image (40) ;
ledit élément de traitement d'image (40) comprenant une pluralité d'éléments de traitement électronique commandés par logiciel (44) ;
lesdits éléments de traitement électronique commandés par logiciel (44) étant configurés pour recevoir une imagerie brute dans ladite pluralité de données provenant de ladite pluralité de matrices plan focal (24).

9. Capteur d'image (14) selon l'une quelconque des revendications précédentes lorsque prise en dépendance de la revendication 4, comprenant en outre :
une plaque en matériau à indice de réfraction élevé, électriquement réactif (76) ;
ledit élément de commande d'image de capteur (28) comprenant un élément de régulation de tension (84) ;
ledit élément de régulation de tension (84) étant configuré pour appliquer une pluralité de tensions différentes sur ladite plaque en matériau à indice de réfraction élevé, électriquement réactif (76) ;
ladite plaque en matériau à indice de réfraction élevé, électriquement réactif (76) modifiant la direction d'une pluralité de rayons lumineux illuminant chacune de ladite pluralité de matrices plan focal (24).

10. Capteur d'image (14) selon l'une quelconque des revendications précédentes, comprenant en outre un système de traitement de données et de commande de capteur agencé pour surveiller des niveaux de saturation et d'énergie de pixel reçue de chaque matrice plan focal et modifier des paramètres de fonctionnement de la matrice plan focal respective pour rendre maximal un rapport signal sur bruit de l'imagerie générée.

11. Capteur d'image (14) selon la revendication 10, dans lequel le système de traitement de données et de commande de capteur est agencé pour optimiser individuellement chaque matrice plan focal (24) pour des conditions de lumière prédominantes du champ de vision imagé indépendamment d'autres des matrices plan focal (24).

12. Capteur d'image (14) selon la revendication 11, dans lequel le système de traitement de données et de commande de capteur est agencé pour commander la matrice plan focal respective (24) pour capturer des images de telle sorte que l'objet le plus lumineux dans le champ de vision ne sature que le pixel d'imagerie observant le point le plus lumineux.

13. Procédé pour fournir une imagerie par satellite, comprenant :
disposer un capteur d'image (14) comprenant une pluralité de télescopes co-collimatés (18) pour montage sur un satellite devant être placé en orbite géostationnaire, les télescopes co-collimatés (18) ayant sensiblement le même champ de vision d'une planète lorsque le satellite est en orbite géostationnaire, chaque télescope (18) comprenant un plan focal respectif (22), **caractérisé par le fait que** chaque plan focal (22) contient une pluralité de matrices plan focal (24), les matrices plan focal respectives (24) étant disposées de manière clairsemée sur leur plan focal respectif (22), les zones actives des matrices plan focal disposées de manière clairsemée (24) de tous les télescopes (18) étant positionnées pour couvrir, pour un moment donné, un champ de vision sensiblement contigu entre elles ;
diriger une image de chacun de la pluralité de télescopes co-collimatés (18) sur le plan focal respectif (22) pour capturer une seule image d'un hémisphère visible généralement entier de la surface de la planète sur tous ses matrices plan focal disposées de manière clairsemée (24) ;
générer des données représentant au moins une partie de l'image respective à la matrice plan focal respective (24) ; et
combiner les données générées pour former une image d'un hémisphère visible généralement entier de la surface de la planète, le capteur d'image (14) étant configuré pour capturer une image par l'intermédiaire de chaque télescope (18) en parallèle et assembler les images capturées pour produire une seule image couvrant le champ de vision sensiblement contigu.
